(19) Europäisches Patentamt
European Patent Office
Office européen des brevets

(11) Veröffentlichungsnummer: **0 061 092**
**B1**

(12) # EUROPÄISCHE PATENTSCHRIFT

(45) Veröffentlichungstag der Patentschrift: **21.12.83**

(51) Int. Cl.³: **G 03 G 5/14**, G 03 G 5/06, C 09 B 5/62

(21) Anmeldenummer: **82102003.9**

(22) Anmeldetag: **12.03.82**

(54) **Elektrophotographisches Aufzeichnungsmaterial.**

(30) Priorität: **20.03.81 DE 3110960**

(43) Veröffentlichungstag der Anmeldung: **29.09.82 Patentblatt 82/39**

(45) Bekanntmachung des Hinweises auf die Patenterteilung: **21.12.83 Patentblatt 83/51**

(84) Benannte Vertragsstaaten: **BE CH DE FR GB IT LI NL**

(56) Entgegenhaltungen:
**CH - A - 373 844**
**DE - A - 2 139 690**
**DE - A - 2 314 051**
**DE - A - 2 929 518**
**DE - A - 3 001 936**
**FR - A - 2 361 749**
**US - A - 1 715 430**
**US - A - 3 904 407**

**CHEMICAL ABSTRACTS, Band 83, Nr. 12, 22. September 1975, Zusammenfassung 106201v, Seite 581 COLUMBUS, OHIO (US)**

(73) Patentinhaber: **BASF Aktiengesellschaft, Carl-Bosch-Strasse 38, D-6700 Ludwigshafen (DE)**

(72) Erfinder: **Hoffmann, Gerhard, Dr., Pappelstrasse 22, D-6701 Otterstadt (DE)**
Erfinder: **Graser, Fritz, Dr., Blieskasteler Strasse 17, D-6700 Ludwigshafen (DE)**
Erfinder: **Leyrer, Reinhold J., Dr., Menzelstrasse 4, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 061 092 B1

BUNDESDRUCKEREI BERLIN

## Elektrophotographisches Aufzeichnungsmaterial

Die Erfindung betrifft ein elektrophotographisches Aufzeichnungsmaterial bestehend aus einem elektrisch leitfähigen Trägermaterial und einer photohalbleitenden Doppelschicht aus organischen Materialien, sowie ein Verfahren zur Herstellung dieser elektrophotographischen Aufzeichnungsmaterialien und ihre Verwendung für reprographische Zwecke.

Elektrophotographische Aufzeichnungsmaterialien bestehen entweder aus einer homogenen Schicht eines Photohalbleiters auf einem elektrisch leitfähigen Trägermaterial oder aus mehreren, übereinander angeordneten Schichten auf einem Träger. Aufzeichnungsmaterialien mit dieser mehrschichtigen, sogenannten Kompositstruktur sind aufgebaut aus einem leitfähigen Träger, einer ersten Schicht, die Ladungsträger erzeugende erzeugende Verbindungen enthält und einer darüber angeordneten zweiten Schicht mit Ladungsträger transportierenden Stoffen. Als Ladungsträger erzeugende Verbindungen sind in der Literatur neben den üblichen anorganischen Substanzen auch eine Vielzahl von Farbstoffen organischer Natur beschrieben, so u. a. auch Farbstoffe, welche sich vom Perylen ableiten. In der US-PS 3 904 407 werden als Ladungsträger erzeugende Verbindungen Farbstoffe der allgemeinen Formel (III) beschrieben,

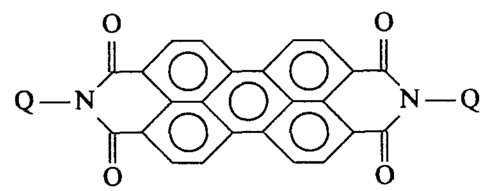
(III)

wobei Q sowohl ein Alkyl-, ein Aryl-, ein Alkylaryl-, ein Alkoxylrest, Halogen als auch ein Heterocyclus und insbesondere p-Chlorphenyl- oder p-Methoxyphenylrest darstellen kann. Ähnlich aufgebaute elektrophotographische Elemente sind Gegenstand der DE-OS 2 237 539, wobei in der ersten Schicht als Ladungsträger erzeugende Verbindungen, Farbstoffe der allgemeinen Formel (IV) enthalten sind.

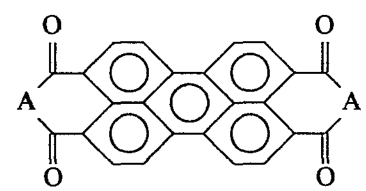
(IV)

Dabei kann A sowohl Sauerstoff als auch N–R sein, worin R Wasserstoff, $C_1$- bis $C_4$-Alkyl, ein gegebenenfalls substituierter Aryl-, Aralkyl- oder heterocyclischer Rest oder –NHR′ mit R′ gleich einem gegebenenfalls substituiertem Phenyl- oder Benzoylrest bedeuten kann. Als bevorzugt werden dabei Perylen-3,4,9,10-tetracarbonsäuredianhydrid, Perylen-3,4,9,10-tetracarbonsäurediimid und N,N′-Dimethylperylen-3,4,9,10-tetracarbonsäurediimid genannt.

Die Verwendung weiterer Perylenderivate der allgemeinen Formel (V)

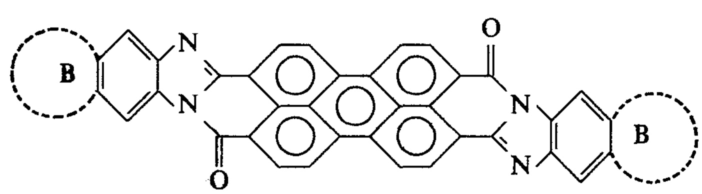
(V)

mit B als einem ankondensierten aromatischen System sind in der DE-OS 2 314 051 beschrieben.

Alle Farbstoffe der allgemeinen Formeln (III), (IV) und (V) können als Ladungsträger des elektrischen Stromes erzeugende Verbindungen innerhalb von mehrschichtigen elektrophotographischen Aufzeichnungsmaterialien eingesetzt werden. Sie zeigen aber, gemessen an den heutigen Anforderungen, eine ungenügende Photoempfindlichkeit. Zudem ist bei einigen dieser Farbstoffe das panchromatische Verhalten, also die gleichmäßig gute Ladungsträgererzeugung über den gesamten sichtbaren Spektralbereich, wenig ausgeprägt.

Aufgabe der vorliegenden Erfindung war es deshalb, hochlichtempfindliche Aufzeichnungsmaterialien bereitzustellen, die möglichst einfach aus einer Farbstoffdispersion hergestellt werden können, verbesserte elektrophotographische Eigenschaften besitzen und ein weitgehend panchromatisches Absorptionsverhalten aufweisen, um farbige Vorlagen gut kopieren zu können und um das gesamte Licht der Kopierlampen in gängigen Kopiergeräten ausnützen zu können.

Die Lösung der Aufgabe geht von einem elektrophotographischen Aufzeichnungsmaterial mit einer Kompositstruktur aus, das sich zusammensetzt aus

a) einem den elektrischen Strom leitenden Trägermaterial,
b) einer ersten Schicht, die Ladungsträger des elektrischen Stromes erzeugende Farbstoffe bestimmter Art enthält, in einer Dicke von 0,005 bis 5 μm und
c) einer zweiten, für das aktinische Licht weitgehend transparenten Schicht, aus isolierenden organischen Materialien mit mindestens einer im Licht Ladungsträger des elektrischen Stromes transportierenden Verbindung, gegebenenfalls in Kombination mit weiteren aktiven oder inaktiven, den Ladungsträgertransport nicht behindernden, sondern eher unterstützenden organischen Materialien oder Bindemitteln, wobei die transparente Schicht eine Dicke von 2 bis 40 μm aufweisen kann.

Es wurde nun überraschend gefunden, daß eine Lösung der gestellten Aufgabe mittels Farbstoffen der allgemeinen Formel (I)

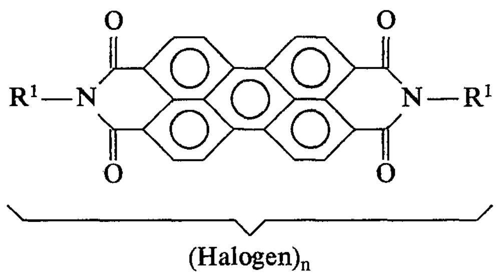

(I)

wobei $R^1$ = Wasserstoff, Alkyl, Aralkyl, Aryl, Alkylaryl, bedeutet oder der Formel II

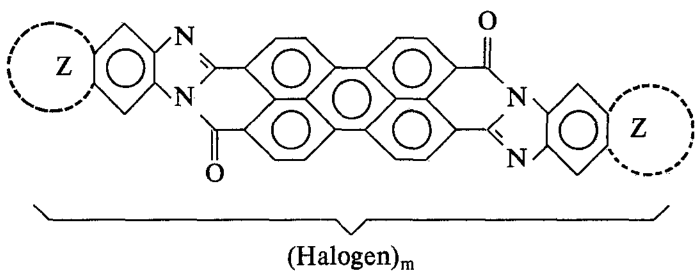

(II)

worin Z gegebenenfalls ein ankondensiertes aromatisches System bedeutet, erreicht wird, wenn eine Halogenierung des aromatischen Grundgerüsts, d. h. eine Substitution der Wasserstoffatome durch Halogenatome erfolgt, wobei die Substitution durch Chlor aus rein herstellungstechnischen Bedingungen bevorzugt wird und der Substitutionsgrad der Wasserstoffatome durch Halogenatome 45 bis 75%, bevorzugt 50 bis 70% der maximalen Substitution, bezogen auf das aromatische Grundgerüst, beträgt. So sind bei Farbstoffen der allgemeinen Formel (I) maximal 8 Halogenatome (n=8) durch Substitution der Wasserstoffatome am Perylengerüst einführbar, entsprechend einer Halogensubstitution von 100%. Im Falle der Farbstoffe der allgemeinen Formel (II) hängt die Anzahl m der erforderlichen Halogenatome für eine 100%ige Halogensubstitution von Z, d. h. weiteren ankondensierten aromatischen Systemen ab. Ist ein Z nicht vorhanden, so sind für eine 100%ige Substitution 16 Halogenatome einzuführen.

Für die Farbstoffe mit einer Halogensubstitution von 45 bis 75% gilt dann für Farbstoffe des Typs (I):

$$3{,}6 \leq n \leq 6,$$

und für die Farbstoffe des Typs (II) (ohne Z)

$$7{,}2 \leq m \leq 12.$$

Bei Anwesenheit von Z, d. h. weiterer ankondensierter, aromatischer Systeme ändern sich diese Werte.

Die Halogenierung solcher aromatischen Verbindungen führt im praktischen Fall immer zu einem Gemisch von Verbindungen mit einem unterschiedlichen Gehalt an Halogenatomen. Es ist Stand der Technik, die Halogenierung so zu führen, daß Gemische mit Verbindungen resultieren, die $(x \pm 1)$ Halogenatome enthalten, wobei X stellvertretend für n und m stehen soll und jeweils im gewünschten Bereich liegt. Im praktischen Fall ergeben sich bei der Halogenbestimmung durch eine ungleiche Verteilung ungerade Zahlen für n und m.

Verbindungen der allgemeinen Formeln (I) oder (II) mit einem Halogensubstitutionsgrad außerhalb des erfindungsgemäßen Bereiches oder aber ohne Halogengehalt (entsprechend den Verbindungen

der allgemeinen Formeln (III), (IV) und (V) zeigen nicht die überraschend guten elektrophotographischen Eigenschaften. Ganz besonders schlecht verhalten sich Verbindungen der allgemeinen Formeln (I) und (II) mit einem Halogensubstitutionsgrad von 100%.

Gemäß der Erfindung gilt, daß die allgemeine Formel (II) stellvertretend für das Isomerengemisch aus der symmetrischen Form und der unsymmetrischen Form, d. h. Ankondensation des Benzimidazolringes unsymmetrisch zur zweizähligen Drehachse des Moleküls, steht.

Zur Herstellung der erfindungsgemäßen elektrophotographischen Aufzeichnungsmaterialien werden für die erste, Ladungsträger erzeugende Schicht die erfindungsgemäß geeigneten Farbstoffe in Form einer Dispersion in einem organischen, leicht verdampfbaren Lösungsmittel in Kombination mit einem hierfür üblichen Bindemittel auf das leitfähige Trägermaterial in einer Trockenschichtdicke von 0,005 bis 5, vorzugsweise 0,08 bis 1,2 µm aufgebracht. Die Gießdispersion hierfür wird durch gemeinsames Rollen von etwa 20 bis 85 Gew.-%, bezogen auf den Farbstoffgehalt der Dispersion, an einem oder mehreren das erfindungsgemäße Aufzeichnungsmaterial kennzeichnenden Farbstoff und von 80 bis 15 Gew.-% an dem geeigneten Bindemittel bereitet. Zwischen dem Träger und der ersten Schicht kann eine Haftschicht in einer Dicke von etwa 0,05 bis 5 µm, vorzugsweise 0,1 bis 0,8 µm angeordnet werden.

Über der ersten Schicht wird die transparente zweite Schicht durch Gießen aus einer Lösung angeordnet. Die Dicke der zweiten Schicht liegt zwischen 0,8 und 90, vorzugsweise zwischen 2 und 40 µm. Sie setzt sich aus 30 bis 90 Gew.-% einer oder mehrerer ladungsträgertransportierenden Verbindungen, 65 bis 5 Gew.-% an einem oder mehreren hierfür üblichen Bindemitteln, 0,1 bis 10 Gew.-% an Zusätzen, die die mechanischen Eigenschaften verbessern und gegebenenfalls bis zu 5 Gew.-% an sensibilisierenden oder aktivierenden Verbindungen zusammen. Der Gießprozeß erfolgt aus einem niedrigsiedenden Lösungsmittel.

Zwischen der ersten und der zweiten Schicht ist gegebenenfalls eine Sperrschicht von etwa 0,05 bis 0,5 µm, vorzugsweise 0,1 bis 0,5 µm angeordnet, während es je nach vorgesehener Verwendung des elektrophotographischen Aufzeichnungsmaterials angemessen sein kann, eine als Deck- und Schutzschicht wirkende inaktive Schicht auf die Ladungsträger transportierende Schicht aufzubringen.

Als elektrisch leitfähiges Trägermaterial sind Aluminiumfolien, Aluminiumbleche, Nickelbleche, oder mit Aluminium, Zinn, Blei, Wismut oder ähnlichen Metallen bedampfte Kunststoffolien, vorzugsweise Polyesterfolien geeignet. Die Auswahl wird durch das Einsatzgebiet des elektrographischen Elements bestimmt.

Die Sperrschichten zwischen dem leitfähigen Trägermaterial und der ersten Schicht oder zwischen derselben und der zweiten Schicht bestehen üblicherweise aus Metalloxidschichten, z. B. Aluminiumoxidschichten, Polymeren, wie z. B. Polyamid, Polyvinylalkohol, Polyacrylate, Polystyrol oder ähnlichen Systemen. Gegebenenfalls kann aber auch das Bindemittel der ersten Schicht gleichzeitig als Sperrschichtmaterial dienen.

Zur Herstellung der Ladungsträger erzeugenden Schicht der erfindungsgemäßen elektrophotographischen Aufzeichnungsmaterialien sind Polyacrylate, Polymethacrylate, Polyester, Polyphthalsäureester, Polyvinylchloride, Styrol-Maleinsäure-Copolymerisate, Epoxide und andere allgemein übliche Harze als Bindemittel für die Aufnahme der Farbstoffe gemäß der Erfindung geeignet. Für die zweite, die Ladungsträger transportierende Schicht eignen sich als Bindemittel besonders Polyvinylchlorid, Polyesterharze, Polyacetalharze, Polycarbonate, Polystyrol, Polyurethane, d. h. solche Bindemittel, welche spezielle elektrische Eigenschaften zeigen und dem Fachmann hierfür bekannt sind. So bieten sich auch Silikonharze, Polyvinylacetat, Chlorkautschuk, Celluloseester, Äthylcellulose und ähnliche an. Als Ladungsträger transportierende Verbindungen, welche in dieser Schicht enthalten sind, eignen sich die Transparenz für das sichtbare Licht nicht beeinträchtigende Verbindungen, wie

a) niedermolekulare Verbindungen, insbesondere heterocyclische Verbindungen, wie Pyrazolinderivate, Oxazole, Oxadiazole, Phenylhydrazone, Imidazole, Triphenylaminderivate, Carbazolderivate, Pyrenderivate und weitere, kondensierte Aromaten sowie
b) polymere Materialien, wie Poly(N-vinylcarbazol), Copolymerisate aus Carbazol und Styrol, bzw. Vinylacetat und/oder Vinylchlorid.

Vom polymeren Typ ist besonders Poly(N-vinylcarbazol) geeignet.

Die erfindungsgemäßen elektrophotographischen Aufzeichnungsmaterialien können noch weitere Bestandteile zur Verbesserung ihrer mechanischen Eigenschaften enthalten. So können Netzmittel, wie die Silikonöle, die Oberflächenqualität verbessern. Weiter können zusätzlich Sensibilisatoren oder Aktivatoren der oberen zweiten Schicht einverleibt werden. Als Sensibilisatoren, die in disperser Form gelöst werden können, sind z. B. Triphenylmethanfarbstoffe, Xanthonfarbstoffe, lösliche Perylenderivate, wie Perylentetracarbonsäureester und eine Reihe weiterer Verbindungen bekannt. Als Aktivatoren dienen Verbindungen mit hoher Elektronenaffinität, z. B. Nitroverbindungen, wie 2,4,7-Trinitrofluorenon-9.

Das erfindungsgemäße elektrophotographische Aufzeichnungsmaterial enthält hochlichtempfindliche photohalbleitende Doppelschichten, die eine hohe mechanische Stabilität aufweisen und zum

Beispiel auf einer zylindrischen Trommel angeordnet oder als endloses Band umlaufen können, ohne daß Verschleißerscheinungen auftreten. Sie sind demgemäß sehr geeignet zur Verwendung für reprographische Zwecke, als Kopierschichten und elektrophotographische Offsetdruckplatten.

Die Erfindung sei anhand folgender Beispiele näher erläutert.

## Beispiele 1 und 2

Es werden je 5 g der Farbstoffe 1 (n = 0)

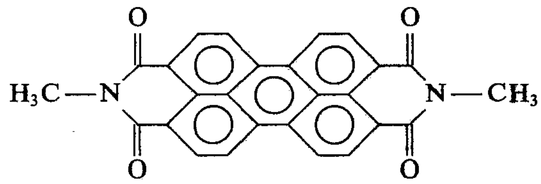

hergestellt aus Perylen-3,4,9,10-tetracarbonsäure und Methylamin, und 2 (n = 5 bis 6), hergestellt gemäß DE-OS 21 39 690,

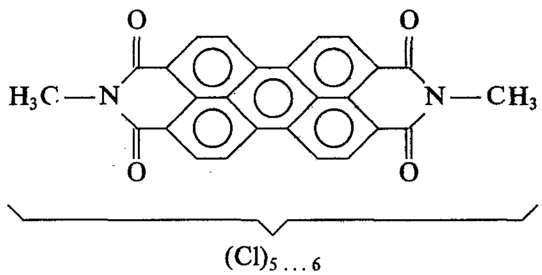

mit je 3 g eines Copolymerisats aus Vinylchlorid, Acrylsäure und einem Maleinsäurediester und 25 g Tetrahydrofuran vermischt und für 12 Stunden auf einem Walzenstuhl gerollt. Danach werden 75 g Tetrahydrofuran und 25 g Toluol zugesetzt. Das Gemisch wird eine Stunde lang auf dem Walzenstuhl homogenisiert.

Diese Dispersion wird dann mit einer Rakel auf ein den elektrischen Strom leitendes, unbehandeltes Aluminiumträgerblech von 175 µm Stärke aufgetragen. Der Gießspalt beträgt 30 µm. Die Rakel wird mit einer Geschwindigkeit von 260 mm/min abgezogen. Nach dem Ablüften und Trocknen für 30 Minuten bei 90° C verbleibt eine Trockenschichtdicke von 0,8 bis 0,9 µm.

Auf diese erste, deckende Schicht (b) wird jeweils eine Lösung aus 47,75 g Poly(N-vinylcarbazol), 5,2 g Phthalsäuredihexylester und 5,75 g eines Polycarbonats mit einer Schmelztemperatur von 220 bis 230° C in einem Lösungsmittelgemisch aus 287,5 g Tetrahydrofuran und 74,25 g Toluol aufgetragen. Der Gießspalt beträgt jeweils 140 µm; die Rakel wird mit 260 mm/min abgezogen. Nach der Ablüftung und der Trocknung für 30 Minuten bei 90° C verbleibt eine zweite Schicht (c) mit einer Feststoffdicke von 8 bis 9 µm Dicke.

## Prüfung

Die so bereiteten elektrophotographischen Elemente werden dann mit einer Hochspannung von −7,40 kV an einem Coronadraht in einem Abstand von 10 mm über der Schichtoberfläche aufgeladen. Nach 20 Sekunden Aufladungszeit wird das maximal erreichte Oberflächenpotential in Volt ermittelt. Das Oberflächenpotential des Farbstoffs 1 wird gleich 100% gesetzt. Das des Farbstoffs 2 wird prozentual hierzu angegeben. Nach weiteren 20 Sekunden im Dunkeln wird der prozentuale Potentialabfall, bezogen auf das maximale Potential, bestimmt. Dann wird das elektrophotographische Element mit dem Licht einer Xenonlampe von 150 Watt Leistungsaufnahme eine Sekunde lang bestrahlt. Der lichtinduzierte prozentuale Potentialabfall, bezogen auf das Potential nach dem Dunkelabfall, wird gemessen.

Ferner wird die maximale Geschwindigkeit des Feldstärkeabfalls in 10 mm Abstand über der aufgeladenen Fläche bei Belichtung bestimmt.

Die Meßergebnisse sind in der Tabelle (1) dem Chlorsubstitutionsgrad in Prozent der maximal möglichen Substitution gegenübergestellt.

**Tabelle 1**

| Farbstoff | Chlorsubst. Grad in % | Anzahl der Chloratome (n) | max. Oberflächenpot. in % zu 1 | lichtinduzierter Potentialabfall in % | max. Geschwindigkeit des Feldstärkeabfalls pro Sekunde [kV/m · s] |
|---|---|---|---|---|---|
| 1 | 0 | 0 | 100 | 78 | 270 |
| 2 | 66 | 5..6 | 57 | 95 | 425 |

Die Ergebnisse gemäß der Tabelle 1 zeigen, daß eine Halogenierung mit einem Substitutionsgrad im erfindungsgemäßen Bereich zu einer Verbesserung der Lichtempfindlichkeit führt.

Beispiele 3 bis 6

Ganz analog den Beispielen 1 und 2 werden elektrophotographische Aufzeichnungsmaterialien mit den Farbstoffen 3 (m=0), hergestellt aus Perylen-3,4,9,10-tetracarbonsäure und Orthophenylendiamin,

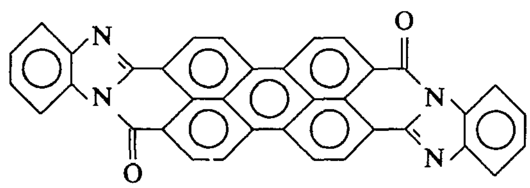

und daraus durch Chlorierung in Chlorsulfonsäure mit Jod als Katalysator 4 (m= 5 bis 6)

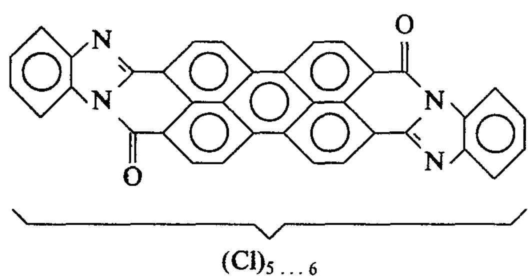

5 (m= 9)

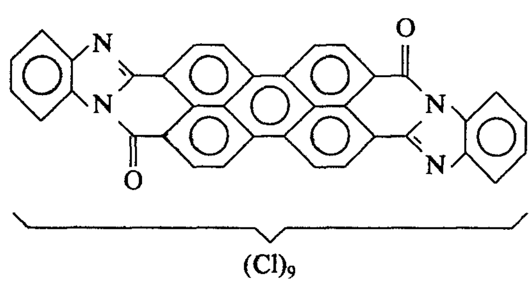

und 6 (m = 14)

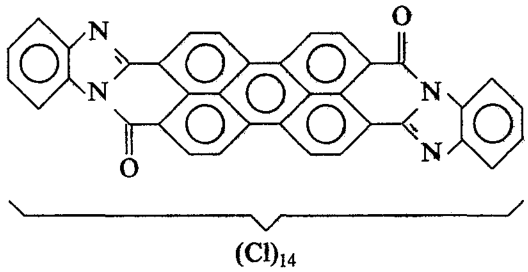

hergestellt und geprüft. Die Meßergebnisse sind in der Tabelle 2 entsprechend zur Tabelle 1 zusammengestellt, wobei das maximale Oberflächenpotential wieder auf Farbstoff 1 bezogen ist.

**Tabelle 2**

| Farbstoff | Chlorsubst. Grad in % | Anzahl der Chloratome (m) | max. Oberflächenpot. in % zu 1 | lichtinduzierer Potentialabfall in % | max. Geschwindigkeit des Feldstärkeabfalls pro Sekunde [kV/m · s] |
|---|---|---|---|---|---|
| 3 | 0 | 0 | 67 | 84 | 325 |
| 4 | 34 | 5 bis 6 | 127 | 68 | 230 |
| 5 | 56 | 9 | 75 | 99,5 | 940 |
| 6 | 87,5 | 14 | 59 | 5 | 50 |

Auch hier weist der Farbstoff mit einem Halogensubstitutionsgrad im erfindungsgemäßen Bereich die besten elektrophotographischen Eigenschaften auf.

**Patentansprüche**

1. Elektrophotographisches Aufzeichnungsmaterial, im wesentlichen bestehend aus

(a) einem den elektrischen Strom leitenden Trägermaterial,
(b) einer ersten, Ladungsträger des elektrischen Stromes erzeugende Farbstoffe der allgemeinen Formeln (I) oder (II)

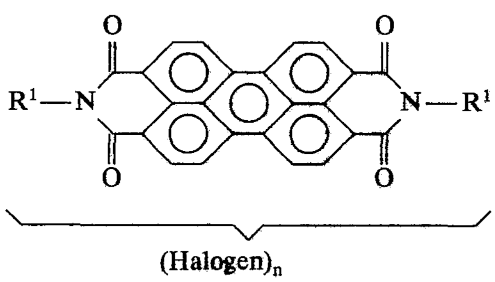

(I)

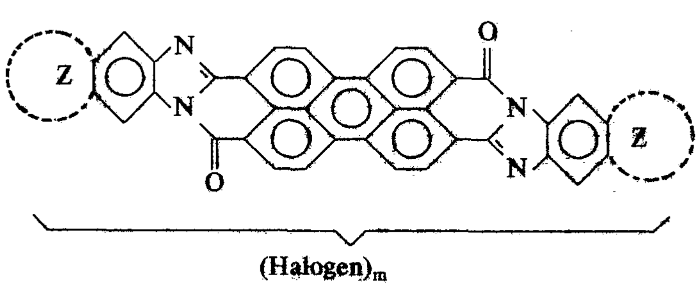

(II)

wobei
R[1] Wasserstoff, Alkyl, Aralkyl, Aryl, Alkylaryl und
Z gegebenenfalls ein ankondensiertes, aromatisches System
bedeuten,
enthaltenden Schicht und

(c) einer zweiten, für das aktinische Licht weitgehend transparenten Schicht aus isolierenden organischen Materialien mit mindestens einer im Licht Ladungsträger des elektrischen Stromes transportierenden Verbindung,

dadurch gekennzeichnet, daß der Halogensubstitutionsgrad, bezogen auf das aromatische Grundgerüst der allgemeinen Formeln (I) oder (II), 45 bis 75% des maximal möglichen beträgt.

2. Elektrophotographisches Aufzeichnungsmaterial gemäß Anspruch 1, dadurch gekennzeichnet, daß der Ladungsträger des elektrischen Stromes erzeugende Farbstoff gemäß der allgemeinen Formel (I) ein chloriertes N,N'-Dimethylperylen-3,4 : 9,10-tetracarbonsäurediimid mit einem Chlorierungsgrad im aromatischen Grundgerüst von etwa 66% der maximal möglichen Chlorierung ist.

3. Elektrophotographisches Aufzeichnungsmaterial gemäß Anspruch 1, dadurch gekennzeichnet, daß der Ladungsträger des elektrischen Stromes erzeugende Farbstoff gemäß der allgemeinen Formel (II) ein chloriertes Perylen-3,4 : 9,10-tetracarbonsäure-bis-benzimidazol mit einem Chlorierungsgrad im aromatischen Grundgerüst von etwa 56% der maximal möglichen Chlorierung ist.

4. Elektrophotographisches Aufzeichnungsmaterial gemäß Anspruch 1, dadurch gekennzeichnet, daß in der zweiten, für das aktinische Licht weitgehend transparenten Schicht die im Licht Ladungsträger des elektrischen Stromes transportierende Verbindung Poly(N-vinylcarbazol) ist.

5. Verfahren zur Herstellung von elektrophotographischen Aufzeichnungsmaterialien gemäß Anspruch 1, dadurch gekennzeichnet, daß auf

(a) ein den elektrischen Strom leitendes Trägermaterial
(b) eine erste, Ladungsträger des elektrischen Stromes erzeugende Farbstoffe enthaltende Schicht aus einer Dispersion, gegebenenfalls in Kombination mit einem isolierenden, organischen Bindemittel, in einer solchen Dicke aufgetragen wird, daß nach einem Trocknungsvorgang eine Feststoffdicke von 0,005 bis 5 µm verbleibt und
(c) auf die getrocknete erste Schicht eine Lösung eines isolierenden, im Licht Ladungsträger des elektrischen Stromes transportierenden, organischen Materials, gegebenenfalls in Kombination mit weiteren isolierenden, organischen Materialien, die miteinander in Lösung auch im getrockneten Film voll verträglich sind, zur Ausbildung einer zweiten Schicht in einer Feststoffdicke von 2 bis 40 µm aufgebracht wird.

6. Verwendung der elektrophotographischen Aufzeichnungsmaterialien gemäß den Ansprüchen 1 und 5 für reprographische Zwecke.

**Claims**

1. An electrophotographic recording medium which consists essentially of

(a) an electrically conductive base,
(b) a first layer containing a charge carrier-producing dye of the general formula (I) or (II)

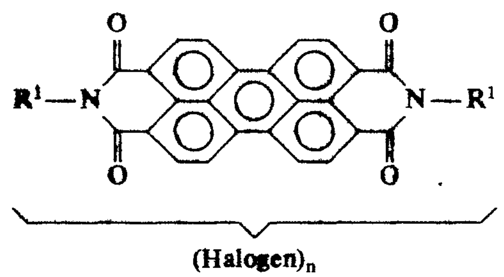

(I)

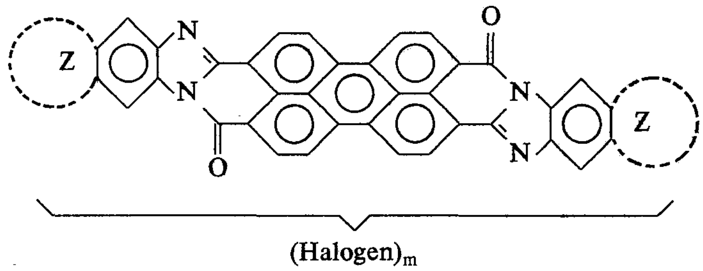

(II)

where R[1] is hydrogen, alkyl, aralkyl, aryl or alkylaryl, and Z, where relevant, is a fused aromatic system, and

(c) a second layer which is substantially transparent to actinic light and is composed of insulating organic materials containing at least one compound which is charge carrier-transporting when exposed to light,

wherein the degree of halogen substitution, based on the aromatic skeleton of the general formula (I) or (II), is from 45 to 75% of the maximum possible.

2. An electrophotographic recording medium as claimed in claim 1, wherein the charge carrier-producing dye of the formula (I) is a chlorinated perylene-3,4 : 9,10-tetracarboxylic acid N,N′-dimethyldiimide with a degree of chlorination of the aromatic skeleton of about 66% of the maximum possible chlorination.

3. An electrophotographic recording medium as claimed in claim 1, wherein the charge carrier-producing dye of the formula (II) is a chlorinated perylene-3,4 : 9,10-tetracarboxylic acid bis-benzimidazole with a degree of chlorination of the aromatic skeleton of about 56% of the maximum possible chlorination.

4. An electrophotographic recording medium as claimed in claim 1, wherein in the second layer, which is substantially transparent to actinic light, the compound which is charge carrier-transporting when exposed to light is poly-(N-vinylcarbazole).

5. A process for the production of an electrophotographic recording medium as claimed in claim 1, wherein there is applied to

(a) an electrically conductive base
(b) a first layer of a dispersion containing a charge carrier-producing dye, with or without insulating organic binder, in such a thickness that a 0.005—5 μm thick layer is obtained after drying, and
(c) a solution of an insulating organic material which is charge carrier-transporting when exposed to light, with or without other insulating organic materials which are completely compatible with one another in solution and in the dry film, is applied to the dried first layer, to form a second layer which is 2—40 μm thick when dry.

6. The use of an electrophotographic recording material as claimed in claims 1 and 5 for reprographic purposes.

**Revendications**

1. Matière d'enregistrement électrophotographique, essentiellement constituée de

(a) un matériau de support conducteur du courant électrique,
(b) une première couche contenant des colorants engendrant des porteurs de charges du courant électrique, des formules générales (I) ou (II)

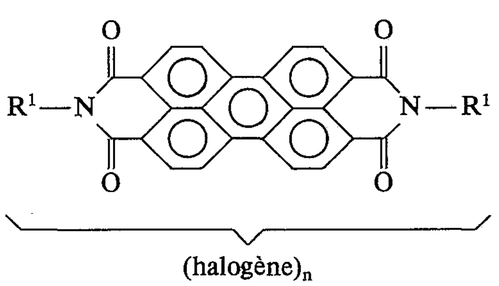

(I)

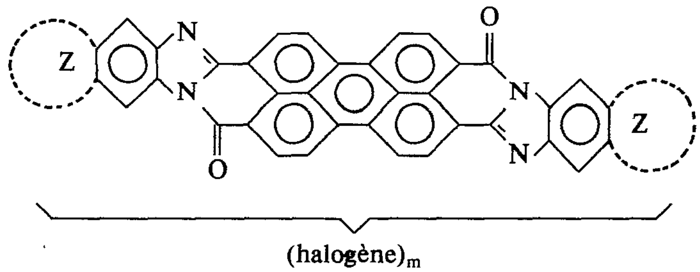

(II)

dans lesquelles

R[1] représente un atome d'hydrogène, un radical alcoyle, aralcoyle, aryle, alcoylaryle et

Z représente éventuellement un système aromatique condensé et

(c) une seconde couche en grande partie transparente à la lumière actinique, en une matière organique isolante, avec au moins un composé transportant des porteurs de charges du courant électrique à la lumière,

caractérisée en ce que le degré d'halogénosubstitution atteint de 45 à 75% du maximum possible, par rapport à l'ossature fondamentale aromatique des composés des formules générales (I) ou (II).

2. Matière d'enregistrement électrophotographique suivant la revendication 1, caractérisée en ce que le colorant engendrant des porteurs de charge du courant électrique répondant à la formule générale (I) est un N,N'-diméthylpérylène-3,4 : 9,10-tétracarboxy-diimide chloré, possedant un degré de chloration dans l'ossature fondamentale aromatique correspondant à environ 66% de la chloration maximale possible.

3. Matière d'enregistrement électrophotographique suivant la revendication 1, caractérisée en ce que le colorant engendrant des porteurs de charges du courant électrique répondant à la formule générale (II) est un pérylène-3,4 : 9,10-tétracarboxy-bis-benzimidazole chloré, possédant un degré de chloration dans l'ossature fondamentale aromatique qui correspond à environ 56% de la chloration maximale possible.

4. Matière d'enregistrement électrophotographique suivant la revendication 1, caractérisée en ce que la seconde couche en grande partie transparente à la lumière actinique est le composé transportant des porteurs de charges du courant électrique à la lumière, appelé poly(N-vinyl-carbazole).

5. Procédé de préparation de matières d'enregistrement électrophotographiques suivant la revendication 1, caractérisé en ce que sur

(a) un matériau de support conducteur du courant électrique, on applique

(b) une première couche contenant des colorants engendrant des porteurs de charges du courant électrique, à partir d'une dispersion, éventuellement en combinaison à un liant organique isolant, en une épaisseur telle qu'après la mise en oeuvre d'un processus de séchage, subsiste une épaisseur de matière solide de 0,005 à 5 µ et

(c) sur la première couche séchée, on applique une solution d'une matière organique transportant les porteurs de charges du courant électrique à la lumière, isolante, éventuellement en combinaison à une matière organique isolante supplémentaire, qui sont totalement mutuellement compatibles, tant en solution qu'à l'état de pellicule séchée, en vue de la formation d'une seconde couche en une épaisseur de matière solide de 2 à 40 µ.

6. Utilisation des matières d'enregistrement électrophotographiques suivant l'une quelconque des revendications 1 à 5 à des fins réprographiques.